# EUROPÄISCHE PATENTSCHRIFT

(11) **EP 1 687 532 B1**
(45) Veröffentlichungstag und Bekanntmachung des Hinweises auf die Patenterteilung: **08.08.2007**
(21) Anmeldenummer: 04802756.9
(22) Anmeldetag: 18.11.2004
(51) Int. Cl.: F04B 23/06, F04B 1/053, B60T 8/40, B60T 8/36

(54) **MEHRKOLBENPUMPE**
MULTI-PLUNGER PUMP
POMPE A PLUSIEURS PISTONS

(30) Priorität: 18.11.2003 DE 10353834
(43) Veröffentlichungstag der Anmeldung: 09.08.2006
(73) Patentinhaber: ROBERT BOSCH GMBH, 70442 Stuttgart (DE)
(72) Erfinder: PABST, Carsten, 70499 Stuttgart (DE); MICKE, Marc, 70806 Kornwestheim (DE); HURST, Matthias, 87509 Immenstadt (DE); MICHALSKI, Guy-Edward, 64293 Darmstadt (DE)
(86) Internationale Anmeldenummer: PCT/DE2004/002543
(87) Internationale Veröffentlichungsnummer: WO 2005/050015

(56) Entgegenhaltungen:
- DE-A1- 4 041 800
- US-A- 5 167 493
- US-A- 5 992 944
- US-B1- 6 446 435

## Beschreibung

### Stand der Technik

Die Erfindung geht aus von einer Mehrkolbenpumpe entsprechend der Gattung des Anspruchs 1. Eine derartige Mehrkolbenpumpe ist beispielsweise aus der US-Anmeldung Nr. 64 46 435 B1 bereits bekannt. Diese Mehrkolbenpumpe umfasst einen Pumpenantrieb aus einer drehbar gelagerten Welle und einem einzelnen, drehfest darauf angeordneten Exzenter. Dieser Exzenter treibt eine Anordnung aus insgesamt sechs Kolbenpumpen an, die radial um den Pumpenantrieb herum in einer gemeinsamen Ebene des Pumpengehäuses angeordnet sind. Die Kolben der verschiedenen Kolbenpumpen führen dabei eine Hin- und Herbewegung aus und sind zur Verbesserung des Ansaugverhaltens als Stufenkolben ausgebildet. Die verschiedenen Kolbenpumpen sind hydraulisch zu zwei Pumpeneinheiten zusammengeschaltet. Beide Pumpeneinheiten sind saugseitig miteinander wirkverbunden, dienen jedoch zwei voneinander getrennten Bremskreisen einer Fahrzeugbremsanlage als Druckerzeuger. Die einzelnen zu einer Pumpeneinheit zusammengeschlossenen Kolbenpumpen sind sternförmig angeordnet und weisen jeweils einen Drehwinkelabstand von 120° zueinander auf. Darüber hinaus ist die erste Pumpeneinheit gegenüber der zweiten Pumpeneinheit um 30° Drehwinkel phasenversetzt. Keine der Kolbenpumpen befindet sich damit in Gegenphase zu einer der anderen Kolbenpumpen.

Auf Grund dieser geometrischen Anordnung der Kolbenpumpen im Pumpengehäuse wird erreicht, dass sich die Ansaugvolumenströme der verschiedenen Kolbenpumpen teilweise überschneiden und dass damit der gesamte Ansaugvolumenstrom der Mehrkolbenpumpe mit einer geringeren Amplitude um einen Mittelwert schwankt als beispielsweise bei einer Mehrkolbenpumpe mit 6x60°-Anordnung der Kolbenpumpen. Mit anderen Worten tritt eine geringere Druckpulsation auf der Saugseite der Mehrkolbenpumpe auf. Diese Druckpulsation kann unerwünschterweise über einen Hauptbremszylinder der Fahrzeugbremsanlage auf das Bremspedal zurückwirken und vom Fahrer wahrgenommen werden.

Die erläuterte hydraulische Zusammenschaltung der verschiedenen Kolbenpumpen zu zwei getrennten Pumpeneinheiten erfolgt mittels Verbindungskanälen im Pumpengehäuse. Diese Verbindungskanäle sind beim bekannten Stand der Technik bauraumbedingt in mehreren Gehäuseebenen ausgebildet, welche von der Gehäuseebene der Kolbenpumpen beabstandet sind. Dies wirkt sich negativ auf das Bauvolumen des Pumpengehäuses aus. Zudem macht es die Anordnung der Kolbenpumpen im Pumpengehäuse erforderlich, die Verbindungskanäle aus einer relativ großen Anzahl einzelner, in verschiedenen Raumrichtungen verlaufenden Teilbohrungen auszubilden. Damit ergeben sich ein verhältnismäßig großer Zerspanungsaufwand für das Pumpengehäuse, verschlechterte Standzeiten der Zerspanungswerkzeuge und mehrfache Umspannvorgänge während des Bearbeitungsprozesses. In Nachfolgearbeitsgängen müssen die Teilbohrungen teilweise zur Umgebung hin wieder verschlossen werden. Neben dem Montageaufwand besteht dabei die potentielle Gefahr von Undichtigkeiten.

Desweiteren erschwert die bekannte Anordnung eine gewünschte Gruppierung der einzelnen Kolbenpumpen innerhalb des Pumpengehäuses und schränkt damit die Flexibilität bei der konstruktiven Auslegung des Pumpengehäuses ein. Abgesehen davon verringern Verbindungsbohrungen, die relativ lang und dabei mehrfach umgelenkt sind die Dynamik eines Druckaufbaus im Bremssystem und begünstigen die Ansammlung unerwünschter Gasblasen.

Eine weitere Mehrkolbenpumpe gemäß dem Oberbegriff des Anspruchs 1 ist aus der US 5167493 A bekannt.

Vor diesem Hintergrund bestand die der vorliegenden Erfindung zugrunde liegende Aufgabe darin, eine Mehrkolbenpumpe vorzuschlagen, welche bei unverändert gutem Pulsationsverhalten fertigungstechnisch einfacher herstellbar ist und ein geringeres Bauvolumen beansprucht. Diese Aufgabe löst eine Mehrkolbenpumpe mit den Merkmalen des Anspruchs 1.

### Vorteile der Erfindung

Gegenüber oben genanntem Stand der Technik weist ein Gegenstand mit den Merkmalen des Anspruchs 1 den Vorteil auf, dass die geometrische Lage der einzelnen Kolbenpumpen im wesentlichen unabhängig von deren hydraulischer Funktion gewählt werden kann. Die Verbindungskanäle der einzelnen Kolbenpumpen können nunmehr in dem Bereich des Pumpengehäuses angeordnet werden, der von den beiden Schnittebenen in denen die Kolbenpumpen liegen, begrenzt ist. Dies erfordert weniger Umlenkungen und weniger Verbohrungsaufwand. Es wird eine hydraulisch direktere Anbindung der verschiedenen Kolbenpumpen erreicht, was sich insbesondere bei niedrigen Umgebungstemperaturen in verkürzten Druckaufbauzeiten des Bremssystems auswirkt. Bei der erfindungsgemäßen Ausbildung der Mehrkolbenpumpe können die Kolbenpumpen bei optimaler hydraulischer Funktion (geringe Pulsation auf der Saugseite) in Abhängigkeit des Anwendungsfalls flexibler geometrisch angeordnet werden. Beispielsweise lassen sich die Kolbenpumpen einer Pumpeneinheit auf einer erste Seite des Pumpengehäuses und die Kolbenpumpen der zweiten Pumpeneinheit auf einer gegenüberliegenden zweiten Seite des Pumpengehäuses platzieren, was die notwendigen hydraulischen Verbindungsbohrungen der zusammengeschlossenen Kolbenpumpen einer Pumpeneinheit weiter verkürzt. Auch die Anzahl der von einem Exzenter beaufschlagten Kolbenpumpen ist variabel. Zudem ist es möglich, die verwendeten Exzenter mit unterschiedlichen Exzentrizitäten auszulegen und speziellen Bestimmungen innerhalb des Bremssystems zuzuordnen. Schließlich sind die Komponenten der beiden Bremskreise räumlich gut trennbar voneinander anordenbar und lassen sich dadurch im Sinne ihrer Betriebsfestigkeit spezifischer dimensionieren und absichern.

Durch die erfindungsgemäßen Merkmale ergeben sich einfachere Fertigungs- und Montageprozesse, was die Taktzeiten bei der Zerspanung des Pumpengehäuses und bei der Montage der Mehrkolbenpumpe deutlich verkürzt. Für die Zerspanung reichen einfache, rechtwinklige Anschläge oder Gegenflächen am Pumpengehäuse aus. Damit sind diese Prozesse sicherer beherrschbar. Schließlich lässt sich durch die erfindungsgemäßen Maßnahmen das Pumpengehäuse kompakter darstellen, also Bauraum einsparen.

Weitere Vorteile oder vorteilhafte Weiterbildungen der Erfindung ergeben sich aus den Unteransprüchen oder der nachfolgenden Beschreibung.

### Zeichnung

Ein Ausführungsbeispiel der Erfindung ist in der Zeichnung dargestellt und in der nachfolgenden Beschreibung näher erläutert.

Es zeigen:
- Figur 1: eine perspektivische Ansicht eines erfindungsgemäß ausgebildeten Pumpengehäuses einer Mehrkolbenpumpe;
- Figur 2: schematisch vereinfacht, einen erfindungsgemäß ausgebildeten Pumpenantrieb dieser Mehrkolbenpumpe in der Seitenansicht;
- Figur 3: den Pumpenantrieb in der Vorderansicht und
- Figur 4: in einer teilschematisierten Darstellung die geometrische Anordnung, die hydraulische Verschaltung und den Aufbau der einzelnen Kolbenpumpen der Mehrkolbenpumpe innerhalb des Pumpengehäuses.

### Beschreibung des Ausführungsbeispiels

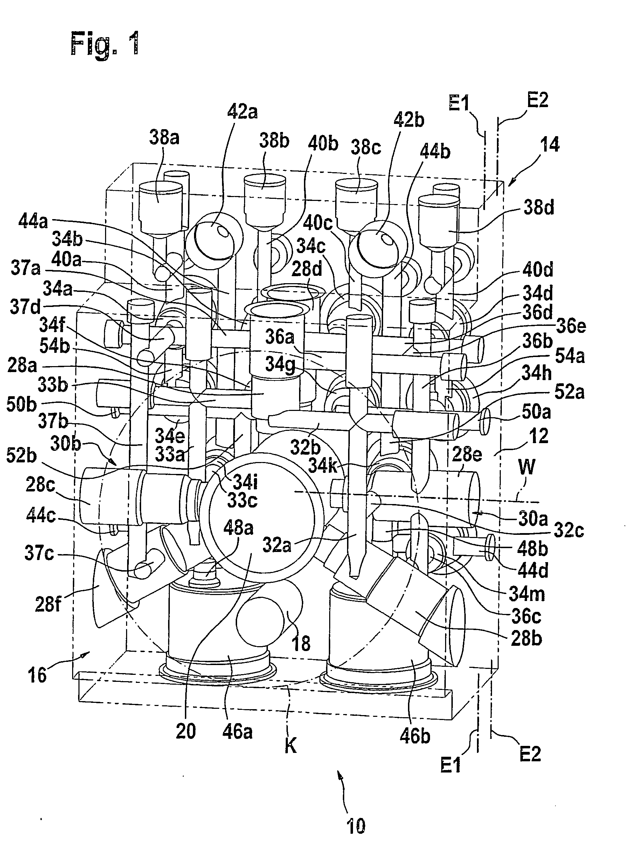

Das in der Figur 1 dargestellte Pumpengehäuse 10 besteht aus einem massiven, im Wesentlichen quaderförmigen Block 12, der vorzugsweise strangpresstechnisch aus einem Nichteisenmaterial hergestellt ist. In einem spanenden Nachbearbeitungsprozess werden Aufnahmen (beispielsweise 28,34) für verschiedene, nachfolgend erläuterte Komponenten zur Steuerung eines elektrohydraulischen Fahrzeugbremssystems sowie Verbindungskanäle (beispielsweise 32,33,36,37), welche diese Aufnahmen hydraulisch miteinander verbinden, in das Pumpengehäuse 10 eingebracht. Das nachfolgend erläuterte Bohrbild des Pumpengehäuses 10 stellt eine mechanische Umsetzung des aus der US 64 46 43 5 B1 bekannten hydraulischen Schaltschemas für eine elektrohydraulische Fahrzeugbremse dar. Hinsichtlich der Funktionsweise dieser elektrohydraulischen Fahrzeugbremsanlage wird auf diese Druckschrift verwiesen. Die Erfindung ist auf eine fertigungstechnisch besonders vorteilhafte Anordnung dieser Aufnahmen 28,34 und Druckmittelkanäle 32,33,36,37 innerhalb des Pumpengehäuses 10 gerichtet, welche sich auf Grund von erfindungsgemäßen Weiterbildungen, insbesondere des Pumpenantriebs, ergibt.

Das Pumpengehäuse 10 ist in der Figur 1 in Einbaulage gezeichnet. Es weist eine ebene Rückseite 14 sowie eine an ihrem oberen und an ihrem unteren Ende über die gesamte Blockbreite rechtwinklig zur Rückseite 14 hin abgesetzte Vorderseite 16 auf. Die Rückseite 14 dient zur Befestigung eines in der Figur 1 nicht dargestellten elektronischen Steuergeräts, welches diese Rückseite 14 im Wesentlichen überdeckt. Mit dem Steuergerät werden Elektromagnetventile in Abhängigkeit von den Schlupfverhältnissen an den verschiedenen Rädern des Fahrzeugs angesteuert. Auch diese Elektromagnetventile sind nicht eingezeichnet, jedoch zeigt die Figur 1 die verschiedenen Ventilaufnahmeräume 34a-m dieser Elektromagnetventile. Diese Ventilaufnahmeräume 34a-m sind als abgestufte Sacklochbohrungen ausgeführt und erstrecken sich in waagerechter Ausrichtung von der Rückseite 14 her in das Innere des Pumpengehäuses 10 hinein.

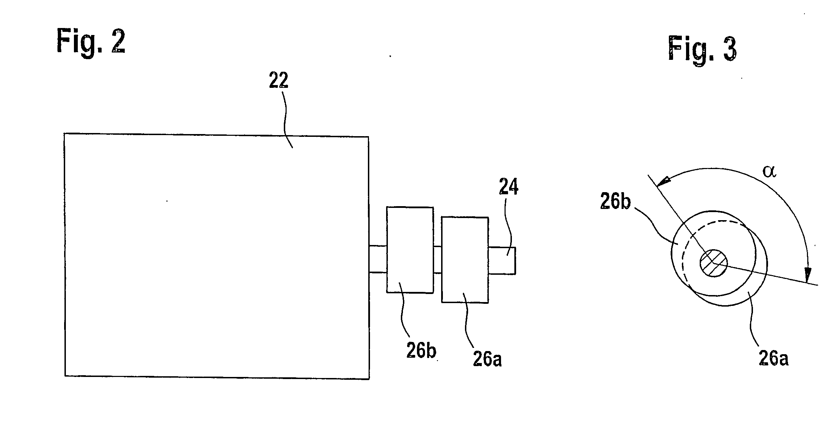

Die abgesetzte Vorderseite 16 dient zur Befestigung eines Antriebsmotors 22 (Figur 2). Als Antriebsmotor 22 dient ein konventioneller Elektromotor, dessen elektrische Ansteuerung ebenfalls durch das Steuergerät erfolgt. Zur Kontaktierung des Antriebsmotors 22 ist nach Figur 1 im Pumpengehäuse 10 eine von der Vorderseite ausgehende und auf der Rückseite ausmündende Durchgangsbohrung 18 vorhanden, durch welche dessen in der Figur 1 nicht sichtbaren elektrischen Kontakte zum Steuergerät hindurchgeführt sind. Der Antriebsmotor 22 hat einen im Wesentlichen kreisrunden Querschnitt, welcher einen Großteil des nicht abgestuften Teils der Vorderseite des Pumpengehäuses einnimmt. Die Umfangsfläche des Antriebsmotors 22 ist in der Figur 1 durch einen gestrichelten Kreis K angedeutet. Im Zentrum dieses Kreises K mündet eine sacklochartige Ausnehmung 20 aus, welche sich senkrecht zur Zeichenebene in das Innere des Pumpengehäuses 10 hinein erstreckt und im Innendurchmesser abgesetzt ist. Diese sacklochartige Ausnehmung 20 bildet im komplettierten Zustand des Pumpengehäuses 10 die Aufnahme für einen Pumpenantrieb.

Diesen Pumpenantrieb zeigt Figur 2 schematisch vereinfacht. Er besteht aus dem erwähnten Antriebsmotor 22 und einer davon angetriebenen Motorwelle 24. Diese Motorwelle 24 treibt erfindungsgemäß zwei, in axialem Abstand zueinander angeordnete Exzenter 26a,26b einer Exzentereinheit zu einer Rotationsbewegung an. Wie Figur 3 zeigt, sind die Exzenter 26a,26b um einen bestimmten Drehwinkel α, gegeneinander verdreht auf der gemeinsamen Antriebswelle 24 drehfest verankert. Beim Ausführungsbeispiel beträgt dieser Drehwinkel α exemplarisch 150°. Beide Exzenter 26a,b weisen beispielhaft gleich große Exzentrizitäten auf, bei Bedarf ist es jedoch vorstellbar unterschiedliche Exzentrizitäten vorzusehen. Es ist davon auszugehen, dass die Antriebswelle 24 an ihrem freien Ende in einem Wellenlager (nicht gezeichnet) gelagert ist, das im durchmesserkleineren Endabschnitt der sacklochartigen Ausnehmung 20 des Pumpenantriebs aufnehmbar ist (Figur 1).

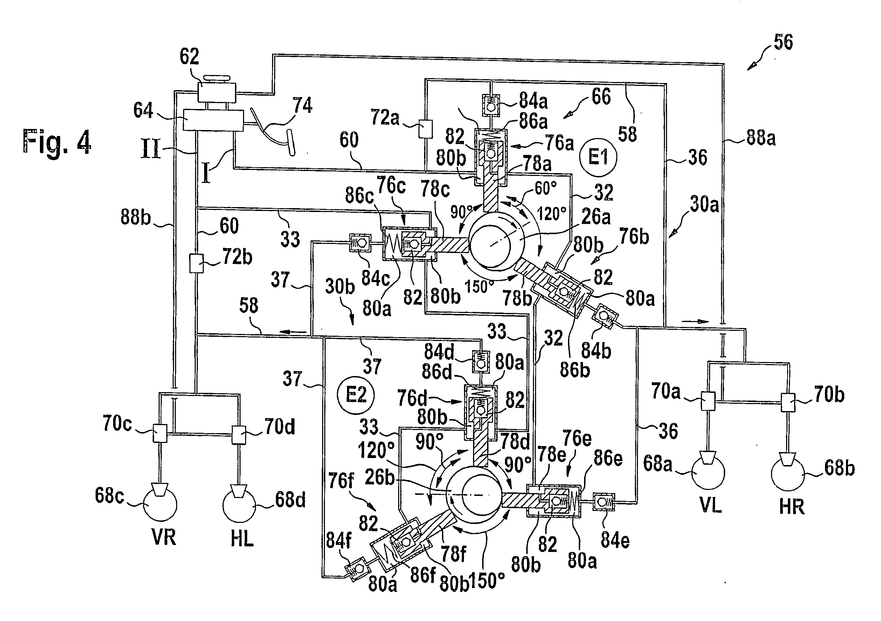

Im Pumpengehäuse 10 nach Figur 1 sind radial um diese sacklochartige Ausnehmung 20 des Pumpenantriebs herum insgesamt sechs Aufnahmen 28a-f für Kolbenpumpen in das Pumpengehäuse 10 durch Bohrarbeitsgänge eingebracht. Diese Aufnahmen 28a-f münden in die sacklochartige Ausnehmung 20 des Pumpenantriebs ein. Beispielhaft sind die drei Aufnahmen 28a,b,c sternförmig in einer ersten, der Vorderseite 16 zugewandten Schnittebene E1 (siehe auch Figur 4) durch das Pumpengehäuse 10 angeordnet, während sich die Aufnahmen 28d,e,f ebenfalls in sternförmiger Anordnung, in einer, der Rückseite 14 des Pumpengehäuses 10 zugewandten zweiten Schnittebene E2 (siehe auch Figur 4) durch das Pumpengehäuse 10 befinden. Der axiale Abstand der beiden Schnittebenen E1,E2 entspricht im Wesentlichen dem axialen Abstand der beiden Exzenter 26a,b auf der Antriebswelle 24. Demnach werden die in einer gemeinsamen Schnittebene E1 oder E2 liegenden Kolbenpumpen 28a,b,c oder 28d,e,f von jeweils einem der beiden Exzenter 26a,b des Pumpenantriebs betätigt.

Die aus Übersichtlichkeitsgründen nicht eingezeichneten Längsachsen der, gemäß Figur 1 in der ersten Schnittebene E1 liegenden Aufnahmen 28a,b,c weisen zueinander im Uhrzeigersinn betrachtet Drehwinkelabstände von 120°-150°-90° (siehe Figur 4, oben) auf. Die Drehwinkelabstände der Längsachsen der Aufnahmen 28d,e,f der zweiten Schnittebene E2 betragen, ebenfalls betrachtet im Uhrzeigersinn 90°-150°-120° (siehe Figur 4 unten). In jeder Ebene E1, E2 ist genau eine Aufnahme 28a,28d senkrecht ausgerichtet, befindet sich also in der 12-Uhr-Position. Damit ergibt sich eine geometrische Anordnung, bei der vier 28a,c,d,e der insgesamt sechs Aufnahmen 28a-f rechtwinklig zueinander platziert sind, während lediglich zwei verbleibende Aufnahmen 28b und 28f mit einem Drehwinkelabstand von jeweils 30° in bzw. entgegen dem Uhrzeigersinn zu einer Waagerechten W durch die beiden Aufnahmen 28c,28e ausgerichtet sind. Die beiden, senkrecht zum oberen Absatz der Vorderseite hin ausmündenden Aufnahmen 28a,28d liegen fluchtend hintereinander. Eine derartige Anordnung der Aufnahmen 28a-f ist fertigungstechnisch besonders einfach umsetzbar, da lediglich zwei Aufnahmen 28b und 28f für Kolbenpumpen nicht parallel zu einer Senkrechten oder einer Waagerechten durch das Pumpengehäuse 10 verlaufen. Dies erspart aufwendige Umspannvorgänge bei der spanenden Bearbeitung des Pumpengehäuses 10.

In die Aufnahmen 28a-f werden bevorzugt Stufenkolbenpumpen herkömmlich bekannter Bauart eingesetzt. Deren Kolben ragen in die Ausnehmung 20 des Pumpenantriebs abschnittsweise hinein und werden dort durch die Exzenter 26a,26b zu einer Hin- und Herbewegung angetrieben. Die Erfindung ist jedoch nicht zwangsweise auf Kolbenpumpen mit Stufenkolben eingeschränkt, sondern ist auch auf konventionelle Kolbenpumpen mit nicht abgestuften Pumpenkolben anwendbar.

Beispielhaft sind jeweils drei Aufnahmen 28a,b,e bzw. 28c,d,f für derartige Kolbenpumpen zu insgesamt zwei Pumpeneinheiten 30a,30b hydraulisch verschaltet. Die Aufnahmen 28a,b,e der Kolbenpumpen der ersten Pumpeneinheit 30a befinden sich im Ausführungsbeispiel gemäß Figur 1 in der rechten Hälfte und die Aufnahmen 28c,d,f der Kolbenpumpen der zweiten Pumpeneinheit 30b befinden sich in der linken Hälfte des Pumpengehäuses 10. Die jeweils drei Aufnahmen 28a,b,e oder 28c,d,f sind auf die beiden Schnittebenen E1 und E2 des Pumpengehäuses 10 verteilt angeordnet. Wie erwähnt liegen die Aufnahmen 28a,b,c in der Schnittebene E1 und die Aufnahmen 28,d,e,f in der Schnittebene E2. Dazu sind diverse, unten im Detail bezeichnete, Verbindungskanäle im Pumpengehäuse 10 vorgesehen, welche die Niederdruckseiten oder die Hochdruckseiten der Kolbenpumpen miteinander verbinden. Die Verbindungskanäle verlaufen erfindungsgemäß in dem von den beiden Schnittebenen E1 und E2 begrenzten Bereich des Pumpengehäuses 10.

Die Niederdruckseiten der Kolbenpumpen befinden sich jeweils im Bereich des der Ausnehmung 20 für den Pumpenantrieb zugewandten Endes der Aufnahmen 28a-f. Zunächst wird der Verlauf der Niederdruckverbindungskanäle der ersten Pumpeneinheit 30a beschrieben. Ein erster Niederdruckverbindungskanal 32a geht von der Stirnfläche des in Figur 1 oberen rechtwinkligen Absatzes auf der Vorderseite 16 des Pumpengehäuses 10 aus, erstreckt sich in der Schnittebene E1 vertikal in Längsrichtung des Pumpengehäuses 10 und endet in der diagonal im Pumpengehäuse 10 angeordneten Aufnahme 28b für eine erste Kolbenpumpe dieser ersten Pumpeneinheit 30a. Ein zweiter Niederdruckverbindungskanal 32b beginnt an der gemäß Figur 1 rechten Außenseite des Pumpengehäuses 10, verläuft quer zum ersten Niederdruckverbindungskanal 32a ebenfalls in der ersten Schnittebene E1, schneidet diesen ersten Niederdruckverbindungskanal 32a und endet in der zum oberen Absatz der Vorderseite 16 hin ausmündenden Aufnahme 28a für eine zweite Kolbenpumpe der ersten Pumpeneinheit 30a. Beide Niederdruckverbindungskanäle 32a,b sind an den Außenseiten des Pumpengehäuses 10 im Durchmesser erweitert und sind in diesem Bereich zur Umgebung hin druckmitteldicht verschlossen. Ein dritter Niederdruckverbindungskanal 32c beginnt an einer Bodenfläche eines sacklochförmigen Ventilaufnahmeraums 34k auf der Rückseite 14 des Pumpengehäuses 10, verläuft senkrecht zu den Schnittebenen E1 und E2 durch das Pumpengehäuse 10 in Richtung der Vorderseite 16, durchdringt auf diesem Weg die Aufnahme 28e für eine dritte Kolbenpumpe der ersten Pumpeneinheit 30a und mündet direkt in den ersten Niederdruckverbindungskanal 32a ein.

Der erwähnte Ventilaufnahmeraum 34k ist zur Aufnahme eines sogenannten Hochdruckschaltventils vorgesehen, welches eine Druckmittelverbindung von einem an das Pumpengehäuse 10 anzuschließenden Hauptbremszylinder der Fahrzeugbremsanlage zur Saugseite der Pumpeneinheit 30a steuert.

Die Hochdruckseiten der Kolbenpumpen befinden sich an den von der Ausnehmung 20 für den Pumpenantrieb abgewandten Enden der Aufnahmen 28a-f für die Kolbenpumpen. Auch diese Hochdruckseiten der Kolbenpumpen einer Pumpeneinheit 30a,b sind durch Hochdruckverbindungskanäle 36a-e miteinander gekoppelt. Diese Hochdruckverbindungskanäle 36a-e sind im wesentlichen in dem, von den beiden Schnittebenen E1 und E2 durch das Pumpengehäuse 10 begrenzten Bereich des Pumpengehäuses 10 angeordnet. Ein erster, nach außen verschlossener Hochdruckverbindungskanal 36a beginnt gemäß Figur 1 an der rechten Außenseite des Pumpengehäuses 10 und verläuft in der ersten Schnittebene E1 bis in die Aufnahme 28a der zweiten Kolbenpumpe der ersten Pumpeneinheit 30a. Ein zweiter Hochdruckverbindungskanal 36b ist senkrecht zu diesem ersten Hochdruckverbindungskanal 36a zur Rückseite des Pumpengehäuses hin versetzt angeordnet, beginnt am oberen rechtwinkligen Absatz der Vorderseite 16 des Pumpengehäuses 10, schneidet die Aufnahme 28e der dritten Kolbenpumpe und endet auf Höhe eines Ventilaufnahmeraums 34m sacklochartig im Inneren des Pumpengehäuses 10. Auch dieser zweite Hochdruckverbindungskanal 36b ist zur Umgebung hin verschlossen.

In den Ventilaufnahmeraum 34m wird später ein sogenanntes Umschaltventil eingebaut, welches eine Druckmittelverbindung von dem an das Pumpengehäuse 10 anzuschließenden Hauptbremszylinder zu einer ebenfalls anzuschließenden Radbremse trennt.

Vom Boden dieses Ventilaufnahmeraums 34m geht ein dritter Hochdruckverbindungskanal 36c aus, der, nachdem er den zweiten Hochdruckverbindungskanal 36b angeschnitten hat, in die Aufnahme 28b der ersten Kolbenpumpe einmündet. Ein vierter Hochdruckverbindungskanal 36d verläuft in der zweiten Schnittebene E2 parallel zum ersten Hochdruckverbindungskanal 36a und verbindet die Ventilaufnahmeräume 34c,d miteinander. Diese beiden Ventilaufnahmeräume 34c,d sind für elektromagnetisch betätigbare Druckaufbauventile vorgesehen, welche den Druckaufbau in einer an das Pumpengehäuse 10 anzuschließenden Radbremse steuern. Mittels eines fünften Hochdruckverbindungskanals 36e, der vom Boden eines Ventilaufnahmeraums 34d ausgeht und senkrecht zu den Schnittebenen E1,E2 durch das Pumpengehäuse 10 verlaufend den zweiten Hochdruckverbindungskanal 36b anschneidet, wird eine Verbindung zwischen dem ersten, zweiten und vierten Hochdruckverbindungskanal 36a,b,d hergestellt.

Im Falle der zweiten Pumpeneinheit 30b geht ein erster Niederdruckverbindungskanal 33a von der Stirnfläche des in Figur 1 oberen rechtwinkligen Absatzes auf der Vorderseite 16 des Pumpengehäuses 10 aus, erstreckt sich vertikal in Längsrichtung des Pumpengehäuses 10 und endet in der diagonal im Pumpengehäuse 10 angeordneten Aufnahme 28f für die erste Kolbenpumpe dieser zweiten Pumpeneinheit 30b. Ein zweiter Niederdruckverbindungskanal 33b beginnt an der gemäß Figur 1 linken Außenseite des Pumpengehäuses 10, verläuft quer zum ersten Niederdruckverbindungskanal 33a, durchdringt diesen und endet in der zum oberen Absatz der Vorderseite 16 hin ausmündenden Aufnahme 28d für eine zweite Kolbenpumpe der zweiten Pumpeneinheit 30b. Beide Niederdruckverbindungskanäle 33a,33b sind an den Außenseiten des Pumpengehäuses 10 im Durchmesser erweitert und sind in diesem Bereich zur Umgebung hin druckmitteldicht verschlossen. Ein dritter Niederdruckverbindungskanal 33c beginnt an einer Bodenfläche des sacklochförmigen Ventilaufnahmeraums 34i auf der Rückseite 14 des Pumpengehäuses 10, verläuft senkrecht zu den Schnittebenen E1 und E2 durch das Pumpengehäuse 10 in Richtung der Vorderseite 16,1 durchdringt den ersten Niederdruckverbindungskanal 33a und mündet direkt in die Aufnahme 28c für die dritte Kolbenpumpe dieser Pumpeneinheit 30b ein.

Der erwähnte Ventilaufnahmeraum 34i ist zur Aufnahme eines zweiten Hochdruckschaltventils vorgesehen, welches eine Druckmittelverbindung von einem an das Pumpengehäuse 10 anzuschließenden Hauptbremszylinder der Fahrzeugbremsanlage zur Saugseite der zweiten Pumpeneinheit 30b steuert.

Auch die Hochdruckseiten der Kolbenpumpen der zweiten Pumpeneinheit 30b sind mittels Hochdruckverbindungskanälen 37, die innerhalb des von den beiden Schnittebenen E1 und E2 begrenzten Bereichs des Pumpengehäuses 10 ausgebildet sind, hydraulisch miteinander gekoppelt. Ein erster, nach außen verschlossener Hochdruckverbindungskanal 37a beginnt gemäß Figur 1 an der linken Außenseite des Pumpengehäuses 10 und verläuft in der zweiten Schnittebene E2 bis in die Aufnahme 28d für eine Kolbenpumpe der zweiten Pumpeneinheit 30b. Ein zweiter Hochdruckverbindungskanal 37b ist senkrecht zu diesem ersten Hochdruckverbindungskanal 37a ausgerichtet und befindet sich in der ersten Schnittebene E1. Er beginnt am oberen rechtwinkligen Absatz der Vorderseite 16 des Pumpengehäuses 10, schneidet die Aufnahme 28c der Kolbenpumpe dieser Pumpeneinheit 30b und endet auf Höhe eines weiteren Ventilaufnahmeraums 341 sacklochartig im Inneren des Pumpengehäuses 10. Auch dieser zweite Hochdruckverbindungskanal 37b ist zur Umgebung hin verschlossen.

In den Ventilaufnahmeraum 341 wird später ein weiteres sogenanntes Umschaltventil eingebaut, welches eine Druckmittelverbindung von dem an das Pumpengehäuse 10 anzuschließenden Hauptbremszylinder zu einer ebenfalls anzuschließenden Radbremse trennt.

Vom Boden dieses Ventilaufnahmeraums 341 geht ein dritter druckseitiger Hochdruckverbindungskanal 37c aus, der, nachdem er die Aufnahme 28f durchdrungen hat, den zweiten Hochdruckverbindungskanal 37b anschneidet und dann sacklochartig im Inneren des Pumpengehäuses 10 endet. Der erste Hochdruckverbindungskanal 37a verbindet die Ventilaufnahmeräume 34a,b miteinander. Diese beiden Ventilaufnahmeräume 34a,b sind für elektromagnetisch betätigbare Druckaufbauventile vorgesehen, welche den Druckaufbau in einer an das Pumpengehäuse 10 anzuschließenden Radbremse steuern. Mittels eines weiteren Hochdruckverbindungskanals 37d, der vom Boden des Ventilaufnahmeraums 34a ausgeht wird eine Verbindung zwischen dem ersten und dem zweiten Hochdruckverbindungskanal 37a,b hergestellt. Dieser Hochdruckverbindungskanal 37d verläuft senkrecht zu den Schnittebenen E1 und E2 durch das Pumpengehäuse 10, schneidet den ersten Hochdruckverbindungskanal 37a und anschließend den zweiten Hochdruckverbindungskanal 37b und endet sacklochartig im Inneren des Pumpengehäuses 10.

An der in Figur 1 nach oben weisenden Außenseite des Pumpengehäuses 10 sind insgesamt vier Hydraulikanschlüsse 38a-d vorhanden, welche über vertikal ausgerichtete Stichbohrungen 40a-d mit den darunter liegenden Ventilaufnahmeräumen 34a-d der Druckaufbauventile verbunden sind. An diese Hydraulikanschlüsse 38a-d sind Bremsleitungen anschließbar, die zu jeweils einer Radbremse einer Fahrzeugbremsanlage führen.

Ferner sind an dem, durch den oberen Absatz zurückgesetzten Bereich der Vorderseite 16 des Pumpengehäuses zwei Hauptbremszylinderanschlüsse 42a,b zu erkennen. An diese beiden Anschlüsse 42a,b ist ein externer Hauptbremszylinder anschließbar, über den der Fahrer eines Fahrzeugs seinen Bremswunsch vorgibt.

Ein in seinem Aufbau an sich bekannter Hauptbremszylinder weist zwei voneinander getrennte Bremskreise (Figur 4, Position I,II) auf, so dass für jeden Bremskreis I,II ein eigener Anschluss 42a,42b am Pumpengehäuse 10 vorhanden ist. Von jedem dieser Hauptbremszylinderanschlüsse 42a,42b ausgehend, führt ein vertikaler Kanal 44a,b mittelbar zu an der unteren Stirnseite des Pumpengehäuses 10 ausgebildeten Einbauräumen 46a,b für Niederdruckspeicher. Auf ihren Wegen durch das Pumpengehäuse 10 durchdringen die Kanäle 44a,b die Ventilaufnahmen 34i und 34k der Hochdruckschaltventile. Sacklochartige Kanäle 44c und 44d, die von der linken beziehungsweise rechten Außenseite des Pumpengehäuses 10 ausgehen und senkrecht zu den Kanälen 44a,b ausgerichtet sind, stellen eine Druckmittelverbindung zwischen den Ventileinbauräumen 341 und 34m und diesen vertikal verlaufenden Kanälen 44a und 44b her. Auch diese Kanäle 44c,d sind zur Umgebung hin verschlossen. Sie verlaufen zusammen mit den Kanälen 44a und 44b in einer weiteren gemeinsamen Schnittebene des Pumpengehäuses 10. Letztere ist zeichnerisch in Figur 1 nicht angedeutet, da sie außerhalb des von den beiden Schnittebenen E1 und E2 begrenzten und für die Erfindung maßgeblichen Bereichs des Pumpengehäuses 10 liegt. Besagte Schnittebene ist relativ zur Schnittebene E2 noch weiter zur Rückseite 14 des Pumpengehäuses 10 hin versetzt.

Die Einbauräume 46a,b sind über jeweils einen zweiten, parallel zu den vertikalen Kanälen 44a,b versetzten Zusatzkanal 48a,b mit den waagerecht in der zweiten Schnittebene E2 liegenden Aufnahmen 28c,e der jeweils dritten Kolbenpumpe der Pumpeneinheiten 30a,b verbunden und zwar im Speziellen mit dem Niederdruckbereich dieser Kolbenpumpen.

Schließlich sind auf der Rückseite des Pumpengehäuses unmittelbar unterhalb der Ventilaufnahmeräume 34a-d der Druckaufbauventile noch zusätzliche Ventilaufnahmeräume 34e-h für Druckabbauventile vorhanden. Auch diese Ventilaufnahmeräume 34e-h sind im Bereich ihres im Inneren des Pumpengehäuses 10 liegenden Endes mittels waagerecht geführten und von der rechten und linken Außenseite des Pumpengehäuses 10 ausgehenden Stichkanälen 50a,b miteinander gekoppelt. Die Stichkanäle 50a,b wiederum sind durch durchgehende Vertikalkanäle 52a,b in der zweiten Schnittebene E2 mit den Einbauräumen 46a,b der Niederdruckspeicher verbunden. Eine Kanalverbindung in Form einer kurzen Stichbohrung 54 stellt eine Hydraulikanbindung der Ventileinbauräume 34a und 34d an die Ventileinbauräume 34e, 34h der Druckaufbauventile her.

Die Druckabbauventile steuern den Druckabbau in den ihnen zugeordneten Radbremsen des Fahrzeugs.

Wie bereits erwähnt, wird diese beschriebene Anordnung der beiden Pumpeneinheiten 30a,b im Wesentlichen dadurch ermöglicht, dass der Pumpenantrieb durch zwei axial beabstandete Exzenter 26a,b erfolgt. In Kombination damit sind die beiden Pumpeneinheiten 30a,b gegeneinander verdreht. Darüber hinaus ist wenigstens eine Kolbenpumpe in jeweils einer anderen Schnittebene E1, E2 angeordnet, als die übrigen Kolbenpumpen derselben Pumpeneinheit 30a,b. Obwohl es geometrisch nicht den Anschein hat, sind damit im beschriebenen Pumpengehäuse 10 die verschiedenen Aufnahmen 28a-f der Kolbenpumpen einer Pumpeneinheit 30a,b hydraulisch betrachtet im Abstand von 120° Drehwinkel angeordnet. Zudem sind die beiden Pumpeneinheiten 30a,b gegeneinander um 30° verdreht. Diesbezüglich stimmt die beschriebene Anordnung also mit der im Stand der Technik (US 64 46 435 B1) als besonders pulsationsarm beschriebenen Mehrkolbenpumpe überein. Allerdings erlauben die kennzeichnenden Merkmale des Anspruchs 1 eine wesentlich breitere Varianz bei der konstruktiven Anpassung des Pumpengehäuses 10 an die jeweiligen Bedingungen des vorliegenden Einsatzfalles.

Zur nochmaligen Verdeutlichung dieser geometrischen und hydraulischen Verhältnisse zeigt Figur 4 eine elektrohydraulische Fahrzeugbremsanlage 56 mit einer Fremdkraft betätigten Betriebbremse 58 und einer Muskelkraft betätigten Hilfsbremse 60. Die Betriebsbremse 58 umfasst einen mit einem Vorratsbehälter 62 für Druckmittel versehenen Hauptbremszylinder 64 für zwei Bremskreise I,II , eine Mehrkolbenpumpe 66 mit zwei Pumpeneinheiten 30a,b aus exemplarisch jeweils drei Kolbenpumpen und insgesamt vier Radbremsen 68a-d. Diese Radbremsen 68a-d sind jeweils paarweise mit einer der beiden Pumpeneinheiten 30a,b verbunden. Jeder Radbremse 68a-d ist eine sogenannte Druckmodulationseinrichtung 70a-d vorgeschaltet. Letztere besteht aus jeweils einem, im Zusammenhang mit der Beschreibung von Figur 1 bereits erwähnten Druckaufbau- und Druckabbauventil (nicht dargestellt). Um das Druckniveau in den einzelnen Radbremsen 68a-d zu regeln, sind diese Ventile elektronisch ansteuerbar. Das Druckaufbauventil wird dabei von einer Offen- in eine Schließstellung verbracht, das Druckabbauventil entsprechend umgekehrt.

Die Hilfsbremse 60 besteht aus direkten Druckmittelverbindungen zwischen einem Kreis I,II des Hauptbremszylinders 64 und denjenigen Radbremsen 68a,b oder 68c,d, die diesem Kreis I,II zugeordnet sind. In diese Druckmittelverbindungen ist jeweils ein sogenanntes Umschaltventil 72a,b geschaltet, welches bei funktionstüchtiger Betriebsbremse 58 geschlossen ist und damit diese Hilfsbremse 60 hydraulisch deaktiviert. Im Fehlerfall erfolgt eine elektrische Ansteuerung der Umschaltventile 72a,b so, dass diese in ihre Öffnungsstellung umgeschaltet werden. Nunmehr besteht eine durchgehende Verbindung zwischen dem Hauptbremszylinder 64 und den einzelnen Radbremsen 68a-d. Der Fahrer ist damit im Fehlerfall in der Lage das mit einer derartigen Bremsanlage 56 ausgestattete Fahrzeug durch Muskelkraft abzubremsen. Der Hauptbremszylinder 64 ist dazu über ein Bremspedal 74 betätigbar.

Bei funktionstüchtiger Betriebsbremse 58 erfolgt die Bereitstellung des Bremsdrucks nicht durch die Muskelkraft des Fahrers, sondern durch Fremdkraft in Form einer elektrisch angetriebenen Mehrkolbenpumpe 66. Wie in Zusammenhang mit Figur 1 bereits erwähnt, hat die Mehrkolbenpumpe 66 insgesamt sechs Kolbenpumpen 76a-f. Deren Kolben 78a-f sind als Stufenkolben ausgeführt. Stufenkolben sind, ihrer Bezeichnung entsprechend, im Außendurchmesser einmal abgestuft. Damit begrenzen ein Stufenkolben in seinem zugeordneten Zylinder zwei voneinander getrennte Druckkammern 80a,b. Diese Druckkammern 80a,b verändern ihr Volumen in Gegenphase zueinander. Mit anderen Worten, vergrößert sich das Volumen der einen Druckkammer 80a, während das der zugeordneten andere Druckkammer 80b sich verkleinert. Beide Druckkammern 80a,b haben unterschiedlich große Volumen und stehen über ein zwischengeschaltetes Rückschlagventil 82 miteinander in Verbindung. Dieses Rückschlagventil 82 sperrt, sobald in der volumengrößeren Druckkammer 80a ein Druckaufbau erfolgt. Derartige Stufenkolbenpumpen sind an sich bekannt, weshalb im Folgenden nicht weiter auf ihre Funktion detailliert eingegangen werden muss. Stufenkolbenpumpen zeichnen sich dadurch aus, dass sie saugseitig ein wesentlich verbessertes Pulsationsverhalten aufweisen, als konventionelle Kolbenpumpen mit nicht abgestuften Kolben.

Figur 4 verdeutlicht nochmals die räumliche Anordnung und die hydraulische Verschaltung der insgesamt sechs Kolbenpumpen 76a-f. Dazu sind die beiden Schnittebenen E1 und E2 durch das Pumpengehäuse in Figur 4 untereinanderliegend gezeichnet. In der, der Vorderseite 16 des Pumpengehäuses 10 zugewandten ersten Schnittebene E1 befinden sich die Kolbenpumpen 76a,b,c während in der dazu axial beabstandeten und der Rückseite 14 des Pumpengehäuses 10 zugewandten zweiten Schnittebene E2 die Kolbenpumpen 76d,e,f angeordnet sind. Die Kolbenpumpen 76a,b,c haben Drehwinkelabstände von 120°-150°-90° im Uhrzeigersinn betrachtet zueinander, wobei die Kolbenpumpe 76a senkrecht ausgerichtet ist, das heißt sich in 12-Uhr-Position befindet. Demgegenüber weisen die Kolbenpumpen 76d,e,f Drehwinkelabstände von 90°-150°-120° (betrachtet im Uhrzeigersinn) zueinander auf. Die Kolbenpumpe 76d befindet sich ebenfalls in der 12 Uhr Position und liegt damit fluchtend zur Kolbenpumpe 76a (siehe Figur 1). Ein in der ersten Schnittebene E1 rotierender Exzenter 26a ist in einer Momentanposition gezeichnet, in der sich seine maximale Exzentrizität bei etwa 60° im Uhrzeigersinn zur 12-Uhr-Position befindet. Demgegenüber liegt die maximale Exzentrizität des in der zweiten Schnittebene E2 angeordneten und mit dem ersten Exzenter 26a drehfest gekoppelten zweiten Exzenters 26b 90° entgegen dem Uhrzeigersinn von der 12-Uhr-Position. Mit anderen Worten sind die beiden Exzenter 26a,b um einen Drehwinkel α von insgesamt 150° gegeneinander verdreht. Im Ausführungsbeispiel nach Figur 4 haben die beiden Exzenter 26a,b gleich große Exzentrizitäten.

Hydraulisch betrachtet sind die Kolbenpumpen 76a,b aus der ersten Schnittebene E1 mit der Kolbenpumpe 76e aus der zweiten Schnittebene E2 zur ersten Pumpeneinheit 30a verbunden. Die zweite Pumpeneinheit 30b umfasst die Kolbenpumpe 76c aus der ersten Schnittebene E1 und die Kolbenpumpen 76d und 76f aus der zweiten Schnittebene E2. Die Kolbenpumpen 76a,b,e der ersten Pumpeneinheit 30a liegen somit in der nach Figur 3 rechts und die der zweiten Pumpeneinheit 30b links. Mit der beschriebenen Anordnung ist demnach eine Gruppierung der miteinander verschalteten Kolbenpumpen 76a-f innerhalb des Pumpengehäuses 10 möglich. Die erläuterte hydraulische Verschaltung erfolgt durch die in Figur 4 schematisch und in Figur 1 konstruktiv beschriebenen Verbindungskanäle 32,33,36,37. Es sind Niederdruckverbindungskanäle 32,33 von Hochdruckverbindungskanälen 36,37 zu unterscheiden. Die Niederdruckverbindungskanäle 32,33 verbinden die dem Exzenter 26a,b zugewandten Niederdruckseiten der jeweils miteinander verschalteten Kolbenpumpen miteinander und die Hochdruckverbindungskanäle 36,37 entsprechend die vom Exzenter 26a,b abgewandt liegenden Hochdruckseiten. Die Hochdruckseiten der Kolbenpumpen sind jeweils durch ein Rückschlagventil 84a-f abgesichert, das verhindert, dass bereits gefördertes Druckmittel bei Umkehrung der Bewegungsrichtung des Kolbens 78a-f wieder zurück in die Druckkammer 80a strömen kann. Der Figur 4 ist zudem entnehmbar, dass die Kolben 78a-f durch Federn 86a-f in Richtung des zugeordneten Exzenters 26a,b beaufschlagt sind. Damit wird die Anlage der Kolben 78a-f am Exzenter 26a,b gewährleistet. Die erste Pumpeneinheit 30a versorgt die mit VL und HR bezeichneten Radbremsen 68a,b mit Druckmittel und die zweite Pumpeneinheit 30b die mit VR und HL bezeichneten Radbremsen 68c,d. Abschließend bleibt noch auf die Rücklaufleitungen 88a,b hinzuweisen, die ausgehend von den Druckmodulationseinrichtungen 70a-d beim Druckabbau anfallendes Druckmittel zum Vorratsbehälter 62 hin zurück führen. Der Einfachheit halber ist die Fahrzeugbremsanlage nach Figur 4 als sogenanntes offenes System gezeichnet. Die Erfindung ist jedoch alternativ auch auf geschlossene Bremssysteme mit integrierten Niederdruckspeichern anwendbar.

Selbstverständlich sind Änderungen oder Ergänzungen gegenüber dem beschriebenen Ausführungsbeispiel möglich, ohne vom Grundgedanken der Erfindung abzuweichen. Dieser Grundgedanke wird darin gesehen, die Kolbenpumpen 76a-f einer Pumpeneinheit 30a,b in verschiedenen Ebenen des Pumpengehäuses 10 anzuordnen, was die Einführung eines zweiten Exzenters 26a,b beim Pumpenantrieb bedingt und darüber hinaus die beiden Pumpeneinheiten 30a,b, das bedeutet die Exzenter 26a,b mitsamt den zugeordneten drehwinkelversetzten Aufnahmen 28a-f der Kolbenpumpen gegeneinander zu verdrehen. Zusätzlich erfolgt die Anordnung der Kolbenpumpen 76a-f einer Pumpeneinheit 30a,b in verschiedenen Schnittebenen E1 und E2 des Pumpengehäuses 10. Dies geschieht vor dem Hintergrund Vorteile hinsichtlich der Herstellbarkeit und des Bauvolumens zu nutzen, ohne Nachteile hinsichtlich der Pulsationsarmut einer Mehrkolbenpumpe in Kauf zu nehmen. Dabei ist es nicht zwangsweise erforderlich, dass beide Exzenter 26a,b die selbe Exzentrizität aufweisen oder dass beide Exzenter 26a,b, wie beschrieben, die selbe Anzahl von Kolbenpumpen antreiben müssen. Auch die Werteangaben bezüglich bestehender Drehwinkelabstände zwischen den Pumpeneinheiten 30a,b einerseits und den einzelnen Kolbenpumpen einer Pumpeneinheit 30a,b andererseits sind variierbar, falls beispielsweise nicht die Pulsationsarmut der Mehrkolbenpumpe sondern deren Bauvolumen oder deren einfache Herstellbarkeit bei ihrer konstruktiven Auslegung im Vordergrund stehen.

## Patentansprüche

1. Mehrkolbenpumpe,
mit einem Pumpengehäuse (10), einem Motor (22) und einer vom Motor (22) angetriebenen Exzentereinheit (26a,b), mit einer Anordnung aus mehreren Kolbenpumpen (76a-f), die mittels Verbindungskanälen (32,33,36,37) im Pumpengehäuse (10) hydraulisch zu wenigstens zwei Pumpeneinheiten (30a,b) zusammengeschlossen sind, wobei die Pumpeneinheiten (30a,b) saugseitig miteinander wirkverbunden sind und druckseitig zwei hydraulisch voneinander getrennte Hydraulikkreise (I,II) mit Druckmittel versorgen und wobei die Exzentereinheit (26a,b) und die Anordnung der Kolbenpumpen (76a-f) im Pumpengehäuse (10) konstruktiv derart aufeinander abgestimmt sind, dass die Kolbenpumpen (76a,b,e) der einen Pumpeneinheit (30a) stets im Wechsel mit den Kolbenpumpen (76c,d,f) der zweiten Pumpeneinheit (30b) betätigt sind und wobei ein Phasenversatz besteht zwischen der Betätigung der Kolbenpumpen (76a,b,e; 76c,d,f) einer Pumpeneinheit (30a) einerseits und der Betätigung der beiden Pumpeneinheiten (30a,b) andererseits, so dass sich die Ansaugphasen wenigstens zweier Kolbenpumpen (76a-f) überschneiden, ohne dass sich Kolbenpumpen (76a-f) in Gegenphase zueinander befinden, und wobei, die Exzentereinheit wenigstens zwei axial beabstandete Exzenter (26a und 26b) aufweist, und die Kolbenpumpen (76a-f) in einer der Anzahl von Exzentern (26a,b) entsprechenden Anzahl von Schnittebenen (E1, E2) des Pumpengehäuses (10) angeordnet sind, wobei der axiale Abstand der Exzenter (26a,b) im wesentlichen dem axialen Abstand dieser Schnittebenen (E1, E2) entspricht **dadurch gekennzeichnet, dass** die Verbindungskanäle (32,33,36,37) der Pumpeneinheiten (30a,b) in einem von diesen Schnittebenen (E1,E2) begrenzten Bereich des Pumpengehäuses (10) angeordnet sind.

2. Mehrkolbenpumpe nach Anspruch 1, **dadurch gekennzeichnet, dass** wenigstens eine der zu einer Pumpeneinheit (30a,b) hydraulisch zusammengeschlossenen Kolbenpumpen (76a-f) von einem anderen Exzenter (26a,b) betätigt ist, als die jeweiligen anderen Kolbenpumpen (76a-f) der entsprechenden Pumpeneinheit (30a,b).

3. Mehrkolbenpumpe nach Anspruch 2, **dadurch gekennzeichnet, dass** zwischen zwei aufeinanderfolgend betätigten Kolbenpumpen (76a-f) einer Pumpeneinheit (30a,b) ein Drehwinkelabstand im Bereich zwischen 110° bis 130°, vorzugsweise von 120° besteht.

4. Mehrkolbenpumpe nach einem der Ansprüche 1 bis 3, **dadurch gekennzeichnet, dass** ein Drehwinkelabstand zwischen aufeinanderfolgenden Betätigungen zweier Kolbenpumpen (76a-f) im Wechsel im Bereich um 30° oder im Bereich um 90° beträgt.

5. Mehrkolbenpumpe nach Anspruch 4, **dadurch gekennzeichnet, dass** die Exzenter (26a,b) im Drehwinkel gegeneinander verdreht sind und dass der Drehwinkelabstand der Exzenter (26a,b) im Bereich um 150° beträgt.

6. Mehrkolbenpumpe nach einem der Ansprüche 1 bis 5, **dadurch gekennzeichnet, dass** jeder Exzenter (26a,b) der Exzentereinheit wenigstens zwei Kolbenpumpen (76a-f) antreibt.

7. Mehrkolbenpumpe nach Anspruch 1 bis 6, **dadurch gekennzeichnet, dass** die zu einer Pumpeneinheit (30a,b) zusammengeschalteten Kolbenpumpen (76a-f) räumlich unmittelbar zueinander benachbart im Pumpengehäuse (10) angeordnet sind.

8. Mehrkolbenpumpe nach einem der Ansprüche 1 bis 7, **dadurch gekennzeichnet, dass** die Exzenter (26a,b) des Pumpenantriebs unterschiedlich große Exzentrizitäten aufweisen.

9. Mehrkolbenpumpe nach einem der Ansprüche 1 bis 8, **dadurch gekennzeichnet, dass** ein Kolben (78a-f) wenigstens einer der Kolbenpumpen (76a-f) als Stufenkolben ausgebildet ist und jeweils zwei in ihrem Volumen in Gegenphase zueinander veränderliche Druckkammern (80a,b) begrenzt.

10. Elektrohydraulische Fahrzeugbremsanlage (56) mit einer fremdkraftbetätigten Betriebsbremse (58) und einer muskelkraftbetätigten Hilfsbremse (60) mit jeweils zwei Bremskreisen (I,II), **dadurch gekennzeichnet, dass** die Betriebsbremse (58) mit einer Mehrkolbenpumpe (66) nach einem der Ansprüche 1 bis 9 ausgestattet ist.

## Claims

1. Multiple-piston pump, with a pump casing (10), a motor (22) and an eccentric unit (26a, b) driven by the motor (22), and with an arrangement consisting of a plurality of piston pumps (76a-f) which, by means of connecting ducts (32, 33, 36, 37) in the pump casing (10), are joined together hydraulically to form at least two pump units (30a, b), the pump units (30a, b) being operatively connected to one another on the suction side and supplying pressure medium on the delivery side to two hydraulic circuits (I, II) separately hydraulically from one another, and the eccentric unit (26a, b) and the arrangement of the piston pumps (76a-f) in the pump casing (10) being structurally coordinated with one another in such a way that the piston pumps (76a, b, e) of one pump unit (30a) are always actuated in alternation with the piston pumps (76c, d, f) of the second pump unit (30b), and a phase offset existing between the actuation of the piston pumps (76a, b, e; 76c, d, f) of one pump unit (30a), on the one hand, and the actuation of the two pump units (30a, b), on the other hand, so that the suction phases of at least two piston pumps (76a-f) overlap one another, without piston pumps (76a-f) being in phase opposition to one another, and the eccentric unit having at least two axially spaced-apart eccentrics (26a and 26b), and the piston pumps (76a-f) being arranged in a number of sectional planes (E1, E2) of the pump casing (10) which corresponds to the number of eccentrics (26a, b), the axial spacing of the eccentrics (26a, b) corresponding essentially to the axial spacing of these sectional planes (E1, E2), **characterized in that** the connecting ducts (32, 33, 36, 37) of the pump units (30a, b) are arranged in a region of the pump casing (10) which is delimited by these sectional planes (E1, E2).

2. Multiple-piston pump according to Claim 1, **characterized in that** at least one of the piston pumps (76a-f) joined together hydraulically to form a pump unit (30a, b) is actuated by an eccentric (26a, b) other than that of the respective other piston pumps (76a-f) of the corresponding pump unit (30a, b).

3. Multiple-piston pump according to Claim 2, **characterized in that** a rotary-angle spacing in the region of between 110° and 130°, preferably of 120°, exists between two successively actuated piston pumps (76a-f) of a pump unit (30a, b).

4. Multiple-piston pump according to one of Claims 1 to 3, **characterized in that** a rotary-angle spacing between two successive actuations of two piston pumps (76a-f) in alternation is in the region around 30° or in the region around 90°.

5. Multiple-piston pump according to Claim 4, **characterized in that** the eccentrics (26a, b) are rotated with respect to one another in terms of rotary angle, and **in that** the rotary-angle spacing of the eccentrics (26a, b) is in the region around 150°.

6. Multiple-piston pump according to one of Claims 1 to 5, **characterized in that** each eccentric (26a, b) of the eccentric unit drives at least two piston pumps (76a-f).

7. Multiple-piston pump according to Claims 1 to 6, **characterized in that** the piston pumps (76a-f) joined together to form a pump unit (30a, b) are arranged directly adjacently to one another in the pump casing (10) in spatial terms.

8. Multiple-piston pump according to one of Claims 1 to 7, **characterized in that** the eccentrics (26a, b) of the pump drive have different eccentricities.

9. Multiple-piston pump according to one of Claims 1 to 8, **characterized in that** one piston (78a-f) of at least one of the piston pumps (76a-f) is designed as a stepped piston and in each case delimits two pressure chambers (80a, b) variable in their volume in phase opposition to one another.

10. Electrohydraulic vehicle brake system (56) with a power-operated service brake (58) and with a manually operated auxiliary brake (60), in each case with two brake circuits (I, II), **characterized in that** the service brake (58) is equipped with a multiple-piston pump (66) according to one of Claims 1 to 9.

## Revendications

1. Pompe à plusieurs pistons comportant un boîtier de pompe (10), un moteur (22) et une unité à excentriques (26a, b) entraînée par le moteur (22), un système constitué de plusieurs pompes à pistons (76a-f) qui, par l'intermédiaire de canaux de liaison (32, 33, 36, 37) situés dans le boîtier de pompe (10) sont reliées hydrauliquement pour créer au moins deux unités de pompe (30a, b), qui sont en interaction du côté aspiration, tandis que du côté refoulement, elles alimentent en fluide de pression, deux circuits hydrauliques (I, II), hydrauliquement séparés, l'unité à excentrique (26a, b) et le système des pompes à pistons (76a-f) dans le boîtier de pompes (10) ayant leurs constructions accordées de manière que les pompes à pistons (76a, b, e) d'une unité de pompes (30a) sont toujours actionnées en alternance avec les pompes à pistons (76c, d, f) de la seconde unité de pompes (30b) avec un déphasage entre l'actionnement des pompes à pistons (76a, b, e ; 76c, d, f) d'une unité de pompes (30a) d'une part et l'actionnement des deux unités de pompes (30a, 30b) d'autre part, de sorte que les phases d'aspiration d'au moins deux pompes à pistons (76a-f) se recoupent sans que des pompes à pistons se trouvent en opposition de phases entre elles, l'unité à excentrique présentant au moins deux excentriques (26a, 26b) espacés axialement et les pompes à pistons (76a-f) étant disposées dans des plans de coupe (E1, E2) du boîtier de pompe (10) en nombre correspondant à celui des excentriques (26a, b), la distance axiale des excentriques (26a, b) correspondant essentiellement à la distance axiale entre ces plans de coupe (E1, E2),
**caractérisée en ce que**
les canaux de liaison (32, 33, 36, 37) des unités de pompes (30a, b) sont disposés dans une zone du boîtier de pompe (10) délimitée par ces plans de coupe (E1, E2).

2. Pompe à pistons selon la revendication 1,
**caractérisée en ce qu'**
au moins une des pompes à pistons (76a-f) raccordée hydrauliquement à une unité de pompes (30a, 30b) est actionnée par un excentrique (26a, 26b) autre que celui actionnant les autres pompes à pistons (76a-f) de l'unité de pompe correspondante (30a, b).

3. Pompe à pistons selon la revendication 2,
**caractérisée en ce que**
le décalage angulaire entre deux pompes à pistons (76a-f) qui appartiennent à une unité de pompes (30a, 30b) et qui sont actionnées successivement, est compris entre 110 et 130° et de préférence égal à 120°.

4. Pompe à pistons selon une des revendications 1 à 3,
**caractérisée en ce que**
le décalage angulaire entre les actionnements successifs de deux pompes à pistons (76a-f) fonctionnant en alternance, est de l'ordre de 30° ou de 90°.

5. Pompe à pistons selon une la revendication 4,
**caractérisée en ce que**
les excentriques (26a, b) sont décalés angulairement, d'un écart de l'ordre de 150°.

6. Pompe à pistons selon une des revendications 1 à 5,
**caractérisée en ce que**
chaque excentrique (26a, b) de l'unité à excentriques entraîne au moins deux pompes à pistons (76a-f).

7. Pompe à pistons selon une des revendications 1 à 6,
**caractérisée en ce que**
les pompes à pistons (76a-f) amorcées à une unité de pompes (30a, b) sont directement proches l'une de l'autre dans le boîtier de pompe (10).

8. Pompe à pistons selon une des revendications 1 à 7,
**caractérisée en ce que**
les excentriques (26a, b) d'entraînement des pompes présentent des excentricités de grandeurs différentes.

9. Pompe à pistons selon une des revendications 1 à 8,
**caractérisée en ce qu'**
un piston (78a-f) d'au moins une des pompes à pistons (76a-f) est un piston étagé qui délimite deux chambres de pression (80a, b) dont les volumes varient en opposition de phase.

10. Installation électrohydraulique de freinage de véhicule (56) comprenant un frein de service (58) actionné par une force externe et un frein auxiliaire (60) actionné par une force musculaire, et comprenant chacun deux circuits de freinage (I, II),
**caractérisée en ce que**
le frein de service (58) est équipé d'une pompe à plusieurs pistons (66) selon l'une des revendications 1 à 9.
